Europäisches Patentamt

European Patent Office

Office européen des brevets

(19)

(11) **EP 0 795 260 B1**

(12) **EUROPÄISCHE PATENTSCHRIFT**

(45) Veröffentlichungstag und Bekanntmachung des Hinweises auf die Patenterteilung:
**28.05.2003 Patentblatt 2003/22**

(21) Anmeldenummer: **95937789.6**

(22) Anmeldetag: **22.11.1995**

(51) Int Cl.⁷: $H04Q\ 11/04$, $H04L\ 12/56$

(86) Internationale Anmeldenummer:
**PCT/DE95/01628**

(87) Internationale Veröffentlichungsnummer:
**WO 96/018279 (13.06.1996 Gazette 1996/27)**

(54) **VERFAHREN ZUR REDUKTION VON LAUFZEITSCHWANKUNGEN VON ATM-ZELLEN**

ATM-CELLS JITTER REDUCING PROCESS

PROCEDE DE REDUCTION DE LA GIGUE DE CELLULES DE TRANSMISSION EN MODE ASYNCHRONE

(84) Benannte Vertragsstaaten:
**AT BE CH DE DK ES FR GB IT LI**

(30) Priorität: **30.11.1994 DE 4442654**

(43) Veröffentlichungstag der Anmeldung:
**17.09.1997 Patentblatt 1997/38**

(73) Patentinhaber: **SIEMENS AKTIENGESELLSCHAFT**
**80333 München (DE)**

(72) Erfinder:
• **ORLETH, Robert**
**D-80687 München (DE)**

• **HINTERMAIER, Stefan**
**D-83052 Bruckmühl (DE)**
• **STEINMAIER, Anton**
**D-81379 München (DE)**
• **GEMMER, Thomas**
**D-81737 München (DE)**

(56) Entgegenhaltungen:
**EP-A- 0 485 971**

• **ELECTRONICS AND COMMUNICATIONS IN JAPAN, PART 1 (COMMUNICATIONS), DEC. 1993, USA, Bd. 76, Nr. 12, ISSN 8756-6621, Seiten 14-28, XP002002586 UEMATSU H ET AL: "Cell delay variation smoothing methods for ATM-based SDH signal transport system"**

EP 0 795 260 B1

**Beschreibung**

Die Erfindung betrifft ein Verfahren gemäß dem Oberbegriff des Patentanspruchs 1.

In ATM-Kommunikationsnetzen werden Informationen in Form von Paketen oder Zellen nach einem asynchronen Übertragungsmodus (Asynchronous Transfer Mode, ATM) übertragen. Dabei treten in jenen ATM-Netzen systembedingt Laufzeitschwankungen (Jitter) der ATM-Zellen während des Übertragungsvorgangs auf. Jitter entstehen in der Regel durch eine in einem Netzknoten erfolgten Zwischenspeicherung der ATM-Zellen und hängen von einer Reihe von Parametern ab. So haben beispielsweise die Anzahl der Knoten im Netz, die Belastung (d.h. wieviel Bit/s übertragen werden) sowie die Art des Verkehrs (d.h ob eine variable Bitrate übertragen wird) unmittelbaren Einfluß auf die Größe eines Jitters. Der Jitter einer ATM-Zelle schwankt damit zwischen 0 (optimaler Wert, also kein Jitter) und einem Maximalwert. Das Auftreten von Jittern ist insbesondere dann von Nachteil, wenn als Informationen Bildsignale oder Sprachsignale übertragen werden.

Zur Vermeidung von zu hohen Laufzeitschwankungen sind in der Vergangenheit Grenzwerte spezifiziert worden.So darf z.B nach einer Vorschrift der Deutschen Bundespost pro Netzknoten der maximale Jitter einen Wert von 250 µs nicht überschreiten. Bei einer Verbindung, in der 6 Netzknoten durchlaufen werden (typischer Wert für eine nationale Verbindung), kann sich somit der maximale Jitter auf bis zu 1,5 ms belaufen. Wird eine Übertragungsbitrate von 4 Mbit/s (entsprechend einer Rate von 10000 Zellen/s) zugrunde gelegt,bedeutet dies, daß im Extremfall statt 15 ATM-Zellen keine einzige in der Empfangseinrichtung ankommt.

Aus der deutschen Patentschrift DE 41 32 518 C2 ist eine Schaltungsanordnung für die Übertragung von digitalen Nachrichtensignalen über ein nach dem asynchronen Transfermodus arbeitendes Breitband-Kommunikationssystem bekannt. Dort ist offenbart, wie die Auswirkungen von Jittern in einer Empfangseinrichtung reduziert werden können. Dies erfolgt durch eine Selbstsynchronisierung von Pufferspeichereinrichtungen, was sich in der Praxis als aufwendig erweist.

Der Erfindung liegt die Aufgabe zugrunde, ein Verfahren anzugeben, mittels dem die Auswirkungen von Jittern mit relativ einfachen Mitteln weiter reduziert werden können.

Die Erfindung wird ausgehend vom Oberbegriff des Patentanspruch 1 durch die im kennzeichnenden Teil angegebene Merkmale gelöst.

Vorteilhaft an der Erfindung ist, daß der Abstand zweier aufeinanderfolgender ATM-Zellen vor dem Einspeichern in die Speichervorrichtung der Empfangseinrichtung ermittelt wird. Die derart ermittelten Abstände werden dann über eine fest definierte Mehrzahl von ATM-Zellen auf summiert und auf Basis dieser Berechnungen eine Mittelwertbildung durchgeführt. Der derart berechnete Mittelwert wird dann herangezogen, um die in der Speichervorrichtung abgespeicherten ATM-Zellen aus der Speichervorrichtung wieder auszulesen und weiterzuleiten. Damit ist der Vorteil verbunden, daß der Jitter reduziert wird.

Vorteilhafte Ausgestaltungen sind in den Unteransprüchen angegeben:

Gemäß Anspruch 2 ist vorgesehen, daß die Mittelwertbildung über die Abstände der jeweils zwei aufeinanderfolgesnden ATM-Zellen nach jedem Eintreffen einer ATM-Zelle neu durchgeführt wird.

Gemäß Anspruch 3 ist vorgesehen, daß die Mittelwertbildung durchgeführt wird, indem der zuletzt berechnete Mittelwert über die Summe der Abstände der definierten Anzahl von ATM-Zellen von der zuletzt berechneten Summe der Abstände der definierten Anzahl von ATM-Zellen subtrahiert wird und der neu ermittelte Abstand der zuletzt eingetroffenen ATM-Zelle hinzuaddiert wird. Damit ist der Vorteil verbunden, daß die jeweiligen Zählerstände nicht zwischengespeichert werden müssen.

Gemäß Anspruch 4 ist vorgesehen, daß zu dem Ergebnis der Mittelwertbildung immer dann eine Korrekturgröße hinzuaddiert und/oder subtrahiert wird, wenn der Füllstand der Speichervorrichtung von einem definierten Wert abweicht, und daß mit dem derart ermittelten Wert die in der wenigstens einen Speichervorrichtung gespeicherten ATM-Zellen ausgelesen werden. Damit ist der Vorteil verbunden, daß die bei der Berechnung des Mittelwertes unvermeidlich auftretenden Rundungsfehler wieder zumindest teilweise ausgeglichen werden können. Insbesondere ist die Korrekturgröße immer dann verwendbar, wenn Abweichungen vom optimalen Füllstand der Speichervorrichtung auftreten.

Gemäß Anspruch 5 ist vorgesehen, daß der Anfangszustand hergestellt wird, indem die wenigstens eine Speichervorrichtung zunächst lediglich zur Hälfte mit ATM-Zellen gefüllt wird, die Abstände aufsummiert und der derart ermittelten Wert auf die Anzahl von ATM-Zellen hochgerechnet wird, über die die Mittelwertbildung durchgeführt wird. Damit ist der Vorteil verbunden,daß die Mittelwertberechnung immer erst dann durchgeführt wird, wenn stabile Verhältmisse erreicht sind.

Gemäß Anspruch 6 ist vorgesehen, daß der Abstand zweier aufeinanderfolgender ATM-Zellen durch Zählen der Taktimpulse einer, von einem eingangs der wenigstens einen Speichervorrichtung vorgesehenen Zählregister erzeugten Takteimpulsfolge ermittelt wird, wobei die Taktrate der letzteren sehr viel höher ist, als die Übertragungsrate, mit der die ATM- Zellen von der Sendeeinrichtung zur Empfangseinrichtung übertragen werden. Damit ist der Vorteil verbunden, daß der Fehler bei der Ermittlung des Abstandes gering gehalten werden kann.

Gemäß Anspruch 7 ist vorgesehen, daß die fest definierte Mehrzahl von ATM-Zellen, über die die Mittelwertbildung berechnet wird, eine Potenz von 2 ist.Damit ist der Vorteil verbunden, daß die Berechnungen hardwaremäßig mit geringem Aufwand durchgeführt werden können.

Gemäß Anspruch 8 ist vorgesehen, daß das Auslesen der ATM-Zellen aus der wenigstens einen Speichervorrichtung durch Laden eines ausgangsseitig derselben angeordneten Zählregisters mit dem um die Korrekturgröße beaufschlagten Mittelwert erfolgt. Damit ist der Vorteil verbunden, daß die ATM-Zellen mit dem Mittelwert der aufgetrenen Jitter ausgelesen werden.

Gemäß Anspruch 9 ist vorgesehen, daß für die Dimensionierung der wenigstens einen Speichervorrichtung gilt:

$$\text{FIFO} = 2 \cdot \frac{\max imale\ Bitrate \cdot \max imalen\ Jitter}{Bits/\ Zelle}$$

wobei die Größe FIFO die Dimension "Zellen" hat. Damit ist der Vorteil verbunden, daß die Speichervorrichtung im Speicherumfang optimal angepaßt werden kann.

Die Erfindung wird im folgenden anhand eines Ausführungsbeispiels unter Bezugnahme auf eine Figur näher erläutert.

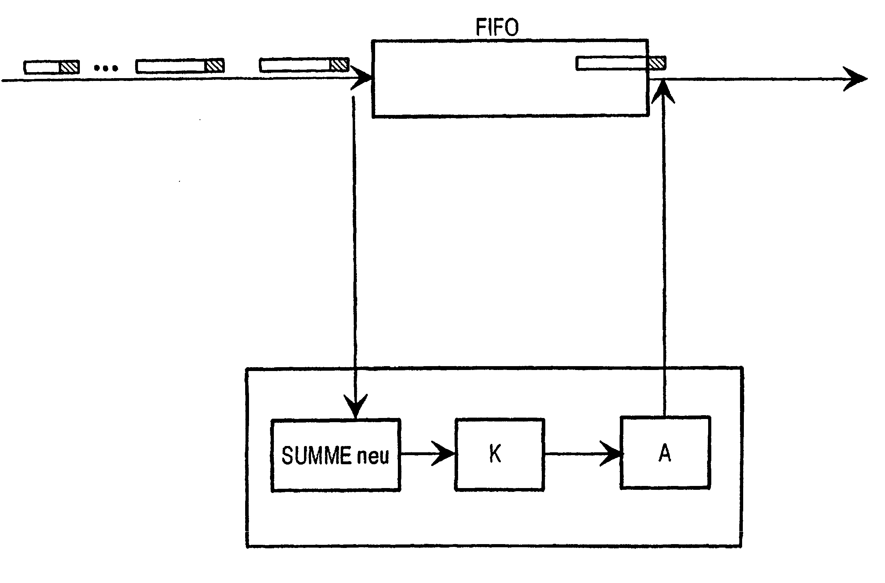

In der Figur ist eine Speichervorrichtung FIFO aufgezeigt.Dabei handelt es sich zweckmäßigerweise um eine Speichervorrichtung, die nach dem Prinzip "First Input/First Output" ankommende ATM-Zellen ein- bzw. wieder ausliest. Zweckmäßigerweise wird lediglich eine klein dimensionierte Speichervorrichtung FIFO vorgesehen. Gemäß der Figur kommen links der Speichervorrichtung FIFO die von einer Sendeeinrichtung abgegebenen ATM-Zellen an und werden in dieselbe eingeschrieben.

Erfindungsgemäß wird vor dem Einschreiben der ATM-Zellen in die Speichervorrichtung FIFO der Abstand zur vorgehenden ATM-Zelle ermittelt. Dies erfolgt unter Zuhilfenahme einer in der Figur nicht aufgezeigten Zählvorrichtung, die eingangs der Speichervorrichtung FIFO angebracht ist. Dabei gilt es zu beachten, daß die Taktrate, mit der die Zählvorrichtung den Abstand bestimmt, sehr viel größer ist als die Übertragungsrate der ATM-Zellen. Das Ziel der erfindungsgemäßen Vorgehensweise besteht darin, eine mittlere Empfangsdatenrate A zu ermitteln. Eine besonders einfache Realisierung ist dann gegeben, wenn die Zahl der ATM-Zellen, über die die Mitelwertbildung durchgeführt wird, eine Potenz von 2 ist. In diesem Fall kann dann die Mittelwertbildung durch eine einfache Schiebeoperation durchgeführt werden. Beispielsweise kann ein Wert durch 256 geteilt werden, indem dieser Wert um ld 256 = 8 bit nach rechts geschoben wird, wobei ld 256 den logarithmus digitalis von 256 repräsentiert.

Die Empfangsdatenrate wird dadurch bestimmt, daß beim Eintreffen einer ATM-Zelle der Zählerstand der Zählvorrichtung zwischengespeichert und der Zähler wieder gelöscht wird. Dieser Zählerstand geht dann in den bisher ermittelten Mittelwert ein, indem der aktuelle Mittelwert zum einen von der Summe der Abstände der letzten N ATM-Zellen abgezogen wird und der Zählerstand der neu eingetroffenen ATM-Zelle zu dieser Größe hinzuaddiert wird. Diese Vorgänge werden durch die Formel

$$\text{Summe}_{neu} = \text{Summe}_{alt} - (\text{Mittelwert der Summe}_{alt}) + \text{Zählerstand}_{neu}$$

dargestellt.

Nachdem eine ATM-Zelle aus der Speichervorrichtung FIFO ausgelesen wurde, wird ausgangsseitig eine weitere, in der Figur ebenfalls nicht aufgezeigte Zählvorrichtung mit dem aktuell ermittelten Mittelwert,der noch mit einer später zu erläuternden Korrekturgröße K beaufschlagt wird, geladen. Diese Zählvorrichtung vermindert nun mit demselben Takt wie die eingangsseitige Zählvorrichtung den geladenen Wert. Ist der Wert der Zählvorrichtung bei Null angelangt, wird die ATM-Zelle aus der Speichervorrichtung FIFO ausgelesen.

Durch die Schiebeoperation beim Berechnen des Mittelwertes tritt jedoch ein Rundungsfehler auf. In der Praxis wird damit bei der Berechnung des Mittelwertes eine Abrundung dieses Wertes vorgenommen. Würde dieser Mittelwert allein als Basis für die Auslesevorgänge genommen, bedeutete dies ein zu schnelles Auslesen der ATM-Zellen aus der Speichervorrichtung FIFO. Aus diesem Grund wird eine Korrekturgröße K vorgesehen, mittels der der aufgetretene Rundungsfehler wieder korrigiert wird. Die oben angegebene Formel wird mit dieser Korrekturgröße K beaufschlagt. Dies bedeutet in der Praxis, daß die Auslesevorgänge nun eine Abhängigkeit vom Füllgrad der Speichervorrichtung aufweisen. Beispielsweise wird der berechnete Mittelwert immer dann aufgerundet, wenn die Speichervorrichtung FIFO weniger als zur Hälfte gefüllt ist. Umgekehrt wird immer dann abgerundet, wenn die Speichervorrichtung FIFO mehr als zur Hälfte gefüllt ist. Dabei gilt es jedoch zu beachten, daß der optimale Füllstand von der statistischen Verteilung der Jitter-Werte abhängt; dies bedeutet, daß dieser optimale Füllstand nicht unbedingt beim halben Füllgrad erreicht sein muß.

Die soeben beschriebene Vorgehensweise ist insbesondere dann zweckmäßig, wenn ein stabiler Zustand bereits erreicht ist und ein wie auch immer definierter Anfangszustand überwunden ist. Insofern muß zu Beginn einer Übertragung von ATM-Zellen dieser Anfangszustand hergestellt werden. Aus diesem Grund wird zu Beginn der Datenübertragung die Speichervorrichtung FIFO zur Hälfte mit ATM-Zellen aufgefüllt. Die eingangsseitige Zählvorrichtung summiert nun die Zählerstände bei der Ankunft der ATM-Zellen auf. Der derart ermittelte Summenwert wird nun auf die Summe von N ATM-Zellen hochgerechnet. Zweckmäßigerweise soll der Füllstand ebenfalls eine Potenz von 2 sein. Damit wird in einfacher Weise errreicht, daß durch eine Schiebeoperation der Summe nach links diese Hochrechnung einfach durchzuführen ist. In dieser Anfangsphase gilt es zu beachten, daß hier der Mittelwert noch relativ weit vom tatsächlichen Mittelwert entfernt ist. Insofern kann zu dieser Zeit eine stärkere Abhängigkeit des Mittelwerts vom Füllgrad der Speichervorrichtung FIFO auftreten. Ist jedoch der Anfangszustand durch die oben beschriebene Vorgehensweise eingeschwungen, findet das erfindungsgemäße Verfahren nach dem oben beschriebenen Prinzip statt.

Abschließend soll noch auf die Dimensionierung der Speichervorrichtung FIFO eingegangen werden:

Wie bereits erwähnt ist die Verteilung eines Jitters abhängig von der Zellrate der ATM-Zellen, da sich die ATM-Zellen nicht gegenseitig überholen können. Zwar kann der Jitter des Abstandes einer Zelle zur nachfolgenden ATM-Zelle von 0 auf einen Maximalwert hochschnellen; umgekehrt Fall kann jedoch ein Jitter um nicht mehr als einen Zellzyklus sinken, da sich sonst Zellen überholen würden. Aus diesem Grund muß die Speichervorrichtung FIFO derart dimensioniert sein, daß so viele ATM-Zellen ausbleiben können, wie dies der Fall ist, wenn der Jitter mit einem Schlag von null auf den Maximalwert springt. Somit läßt sich für die Dimensionierung der Speichervorrichtung FIFO folgende Formel angeben:

$$\text{FIFO} = 2 \cdot \frac{\max imale\ Bitrate \cdot \max imalen\ Jitter}{Bits/\ Zelle}$$

Zellverluste und fehlgeleitete Zellen können bei dieser Vorgehensweise prinzipiell nur bei Zellzykluszeiten erkannt werden, die deutlich über dem maximalen Jitter liegen. Dies wäre beispielsweise bei einer Zellzykluszeit von 64 kBit/s = 170 Zellen /s = 6 ms Zellzyklus sehr viel größer 1,5 ms Jitter der Fall. Nach dem Einschwingvorgang kann ein Zeitfenster angegeben werden, in dem eine ATM-Zelle ankommen müßte. Trifft innerhalb dieses Zeitfensters keine ATM-Zelle ein, so liegt definitionsgemäß der Verlust der ATM-Zelle vor. Trifft außerhalb dieses Zeitfensters eine ATM-Zelle ein, so kann diese dann nicht zu der betreffenden Verbindung gehören.

## Patentansprüche

1.	Verfahren zur Reduktion von Laufzeitschwankungen von ATM-Zellen, mit einer Sendeeinrichtung, die mit einem definierten Zellabstand ATM-Zellen abgibt,und einer ATM-Zellen empfangenden Empfangseinrichtung, die wenigstens eine Speichervorrichtung (FIFO) aufweist, in der die übertragenen ATM-Zellen zwischengespeichert werden **dadurch gekennzeichnet,**
	**daß** nach Erreichen eines definierten Anfangszustandes vor dem Zwischenspeichern der ATM-Zellen in der wenigstens einen Speichervorrichtung (FIFO) eine Mittelwertbildung über die Abstände von jeweils zwei aufeinanderfolgenden ATM-Zellen über eine fest definierte Mehrzahl (N) von ATM-Zellen durchgeführt wird, und
	**daß** das Ergebnis der Mittelwertbildung als Basis für das Auslesen der ATM-Zellen aus der wenigstens einen Speichervorrichtung (FIFO) genommen wird.

2.	Verfahren nach Anspruch 1
	**dadurch gekennzeichnet,**
	**daß** die Mittelwertbildung über die Abstände der jeweils zwei aufeinanderfolgenden ATM-Zellen nach jedem Eintreffen einer ATM-Zelle neu durchgeführt wird.

3.	Verfahren nach Anspruch 1 oder 2
	**dadurch gekennzeichnet,**
	**daß** die Mittelwertbildung ($SUMME_{neu}$) durchgeführt wird, indem der zuletzt berechnete Mittelwert ($MSUMME_{alt}$) über die Summe der Abstände der definierten Anzahl von ATM-Zellen (N) von der zuletzt berechneten Summe ($SUMME_{alt}$) der Abstände der definierten Anzahl (N) von ATM-Zellen subtrahiert wird und der neu ermittelte Abstand der zuletzt eingetroffenen ATM-Zelle hinzuaddiert wird.

4.	Verfahren nach Anspruch 1,2 oder 3
	**dadurch gekennzeichnet,**
	**daß** zu dem Ergebnis der Mittelwertbildung immer dann eine Korrekturgröße (K) hinzuaddiert und/oder subtrahiert wird, wenn der Füllstand der Speichervorrichtung (FIFO) von einem definierten Wert abweicht, und

**daß** mit dem derart ermittelten Wert die in der wenigstens einen Speichervorrichtung (FIFO) gespeicherten ATM-Zellen ausgelesen werden.

**5.** Verfahren nach einem der Ansprüche 1 bis 4,
**dadurch gekennzeichnet,**
**daß** der Anfangszustand hergestellt wird, indem die wenigstens eine Speichervorrichtung (FIFO) zunächst lediglich zur Hälfte mit ATM-Zellen gefüllt wird, die Abstände aufsummiert und der derart ermittelten Wert auf die Anzahl (N) von ATM-Zellen hochgerechnet wird, über die die Mittelwertbildung durchgeführt wird.

**6.** Verfahren nach einem der vorstehenden Ansprüche
**dadurch gekennzeichnet,**
**daß** der Abstand zweier aufeinanderfolgender ATM-Zellen durch Zählen der Taktimpulse einer, von einem eingangs der wenigstens einen Speichervorrichtung (FIFO) vorgesehenen Zählregister erzeugten Taktimpulsfolge ermittelt wird, wobei die Taktrate der letzteren sehr viel höher ist, als die Übertragungsrate, mit der die ATM-Zellen von der Sendeeinrichtung zur Empfangseinrichtung übertragen werden.

**7.** Verfahren nach einem der vorstehenden Ansprüche
**dadurch gekennzeichnet,**
**daß** die fest definierte Mehrzahl (N) von ATM-Zellen, über die die Mittelwertbildung berechnet wird, eine Potenz von 2 ist.

**8.** Verfahren nach einem der vorstehenden Ansprüche
**dadurch gekennzeichnet,**
**daß** das Auslesen der ATM-Zellen aus der wenigstens einen Speichervorrichtung (FIFO) durch Laden eines ausgangsseitig derselben angeordneten Zählregisters mit dem um die Korrekturgröße beaufschlagten Mittelwert (SUMME$_{neu}$) erfolgt.

**9.** Verfahren nach einem der vorstehenden Ansprüche
**dadurch gekennzeichnet,**
**daß** für die Dimensionierung der wenigstens einen Speichervorrichtung (FIFO) gilt:

$$\text{FIFO} = 2 \cdot \frac{\max imale\ Bitrate \cdot \max imalen\ Jitter}{Bits/\ Zelle}$$

**Claims**

**1.** Method for reducing jitter of ATM cells with a transmitting device, which outputs ATM cells with a defined cell interval, and a receiving device, which receives ATM cells and has at least one memory device (FIFO) in which the transmitted ATM cells are buffered, **characterized**
**in that** after a defined initial state is reached and before the ATM cells are buffered in the at least one memory device (FIFO), an averaging of the intervals between in each case two successive ATM cells is carried out over a fixedly defined plurality (N) of ATM cells, and
**in that** the averaging result is taken as a basis for the read-out of the ATM cells from the at least one memory device (FIFO).

**2.** Method according to Claim 1, **characterized**
**in that** the averaging of the intervals between the in each case two successive ATM cells is carried out anew each time an ATM cell arrives.

**3.** Method according to Claim 1 or 2, **characterized**
**in that** the averaging (SUM$_{new}$) is carried out in that the last calculated average value (ASUM$_{old}$) of the sum of the intervals between the defined number of ATM cells (N) is subtracted from the last calculated sum (SUM$_{old}$) of the intervals between the defined number (N) of ATM cells, and the newly determined interval of the ATM cell that arrived last is added.

**4.** Method according to Claim 1, 2 or 3, **characterized**

**in that** a correction quantity (K) is added to and/or subtracted from the averaging result whenever the occupancy of the memory device (FIFO) deviates from a defined value, and
**in that** the ATM cells stored in the at least one memory device (FIFO) are read out using the value determined in this way.

5. Method according to one of Claims 1 to 4, **characterized**
**in that** the initial state is produced in that the at least one memory device (FIFO) is first of all only half-filled with ATM cells, the intervals are summed and the value determined in this way is extrapolated to the number (N) of ATM cells over which averaging is carried out.

6. Method according to one of the preceding claims, **characterized**
**in that** the interval between two successive ATM cells is determined by counting the clock pulses of a clock pulse train generated by a counting register provided on the input side of the at least one memory device (FIFO), the clock rate of said clock pulse train being very much higher than the transmission rate at which the ATM cells are transmitted from the transmitting device to the receiving device.

7. Method . according to one of the preceding claims, **characterized**
**in that** the fixedly defined plurality (N) of ATM cells over which averaging is calculated is a power of 2.

8. Method according to one of the preceding claims, **characterized**
**in that** the ATM cells are read out from the at least one memory device (FIFO) by loading a counting register, which is arranged on the output side of said memory device, with the average value ($SUM_{new}$) to which the correction quantity has been applied.

9. Method according to one of the preceding claims, **characterized**
**in that** the following is applicable to the dimensioning of the at least one memory device (FIFO):

$$FIFO = 2 \cdot \frac{maximum\ bitrate \cdot maximum\ jitter}{bits/cell}$$

**Revendications**

1. Procédé pour réduire la gigue de cellules ATM, comprenant un dispositif d'émission qui délivre des cellules ATM avec un intervalle entre les cellules défini et un dispositif de réception qui reçoit des cellules ATM et qui présente au moins un dispositif de stockage (FIFO) dans lequel les cellules ATM transmises sont temporairement stockées, **caractérisé en ce que**, après avoir atteint un état initial défini avant le stockage temporaire des cellules ATM dans le dispositif de stockage (FIFO) au moins au nombre d'un, un établissement de la moyenne est réalisé pour les intervalles entre deux cellules ATM à chaque fois successives sur une multiplicité (N) définie de manière fixe de cellules ATM et
que le résultat de l'établissement de la moyenne est pris comme base pour extraire des cellules ATM du dispositif de stockage (FIFO) au moins au nombre d'un.

2. Procédé selon la revendication 1, **caractérisé en ce que** l'établissement de la moyenne est réalisé à nouveau sur les intervalles entre deux cellules ATM successives après chaque entrée d'une cellule ATM.

3. Procédé selon la revendication 1 ou 2, **caractérisé en ce que** l'établissement de la moyenne ($SUMME_{neu}$) est réalisé comme suit : la moyenne ($MSUMME_{alt}$), calculée en dernier lieu sur la somme des intervalles du nombre défini de cellules ATM (N) est soustraite de la somme ($SUMME_{alt}$) calculée en dernier lieu des intervalles du nombre défini de cellules ATM (N) et l'intervalle nouvellement déterminé des cellules ATM entrées en dernier lieu y est additionné.

4. Procédé selon la revendication 1, 2 ou 3, **caractérisé en ce que** l'on additionne et/ou l'on soustrait toujours une grandeur de correction (K) au résultat de l'établissement de la moyenne lorsque le niveau du dispositif de stockage (FIFO) s'écarte d'une valeur définie et
qu'avec la valeur ainsi déterminée on extrait les cellules ATM stockées dans le dispositif de stockage (FIFO) au moins au nombre d'un.

**5.** Procédé selon l'une des revendications 1 à 4, **caractérisé en ce que** l'état initial est constitué comme suit: le dispositif de stockage (FIFO) au moins au nombre d'un est d'abord uniquement chargé à moitié de cellules ATM, les intervalles sont additionnés et la valeur ainsi déterminée est extrapolée pour le nombre (N) de cellules ATM à partir duquel l'établissement de la moyenne est réalisé.

**6.** Procédé selon l'une des revendications précédentes, **caractérisé en ce que** l'intervalle de deux cellules ATM successives est déterminé par comptage des impulsions de synchronisation d'un train d'impulsions de synchronisation produit par un registre de comptage prévu à l'entrée du dispositif de stockage (FIFO) au moins au nombre d'un, le taux d'impulsions du train d'impulsions de synchronisation étant beaucoup plus grand que le taux de transfert avec lequel les cellules ATM sont transmises du dispositif d'émission au dispositif de réception.

**7.** Procédé selon l'une des revendications précédentes, **caractérisé en ce que** la multiplicité (N) définie de manière fixe de cellules ATM sur lequel l'établissement de la moyenne est calculé est une puissance de 2.

**8.** Procédé selon l'une des revendications précédentes, **caractérisé en ce que** l'extraction des cellules ATM du dispositif de stockage (FIFO) au moins au nombre d'un est réalisée en chargeant un registre de comptage placé à la sortie de celui-ci et avec la moyenne ($SUMME_{neu}$) munie de la valeur de correction.

**9.** Procédé selon l'une des revendications précédentes, **caractérisé en ce que** pour dimensionner le dispositif de stockage (FIFO) au moins au nombre d'un, on satisfait à:

$$FIFO = 2 * \frac{débit\ binaire\ maximal * gigue\ maximale}{bits\ /\ cellule}$$

EP 0 795 260 B1

FIFO

SUMME neu → K → A